# EUROPEAN PATENT APPLICATION

(11) **EP 4 530 101 A1**
(43) Date of publication of application: **02.04.2025**
(21) Application number: 24201702.8
(22) Date of filing: 20.09.2024
(51) Int. Cl.: B60G 3/14, B62K 5/00, B60G 21/05

(54) **RUNNING UNIT**

(30) Priority: 26.09.2023 JP 2023163019
(71) Applicant: Tsubakimoto Chain Co., Osaka 530-0005 (JP)
(72) Inventor: NAKAGOSHIKI, Keita, Osaka, 530-0005 (JP)
(74) Representative: dompatent von Kreisler Selting Werner - Partnerschaft von Patent- und Rechtsanwälten mbB

(57) **Abstract**

A running unit (100) comprising a main body (110), a pair of left and right pivot arms (112) provided to a swing motion transmission (120) so as to be pivotable about a pivot shaft (111), and wheels (113) provided to the pivot arms respectively. The swing motion transmission includes a first rockable rotating element (121) that rotates in conjunction with one pivot arm (112R), a second rockable rotating element (122) that rotates in conjunction with the other pivot arm (112L), a first rotating transmission element (123) to which rotation is transmitted via the first rockable rotating element and a first elongated transmission element (126), and a second rotating transmission element (124) to which rotation is transmitted via the second rockable rotating element and a second elongated transmission element (127). The first rotating transmission element and the second rotating transmission element are connected together by a linking shaft (125). The first rockable rotating element and the second rockable rotating element are configured to rotate in conjunction with each other and in opposite directions.

## Description

### BACKGROUND OF THE INVENTION

### 1. Field of the Invention

The present invention relates to a running unit that includes a main body, a swing motion transmission connected to the main body, a pair of left and right pivot arms provided to the swing motion transmission so as to be pivotable about a pivot shaft, and wheels provided to the pivot arms respectively.

### 2. Description of the Related Art

Conventionally, a running unit with a main body, a pair of left and right pivot arms pivotable about a pivot shaft, and wheels provided to the pivot arms respectively is known, for example, from Japanese Patent No. 4567813.

The running unit of a multi-wheel vehicle 1 described in Japanese Patent No. 4567813 includes a main body (frame 2), a pair of left and right pivot arms (swing arms 4L and 4R) pivotable about a pivot shaft (support shaft part 3A) relative to the main body (frame 2), and wheels (5L and 5R) provided to the pivot arms (swing arms 4L and 4R) respectively. The pivot shaft (support shaft part 3A) is provided with substantially fan-shaped tilting members 17L and 17R, whose arcuate portions 21 are each connected to a direction-changing member 19, which is shaped in the form of a balance or a pulley, by a string member 20.

The tilting members 17L and 17R are thus linked so that, when one of the wheels (5L and 5R) receives a force from the road surface and is pushed up via the pivot shaft (support shaft part 3A) and pivot arms (4L and 4R), the other one of the wheels (5L and 5R) can be pushed down toward the road surface. When the vehicle makes a turn or changes directions, or when running on a laterally inclined road surface, the wheels (5L and 5R) can be tilted flexibly with the vehicle body, while the ground pressure of the wheels (5L and 5R) is maintained uniform.

### SUMMARY OF THE INVENTION

The running unit known from, for example, the patent literature mentioned above still has some scope of improvement.

Namely, the running unit according to, for example, Japanese Patent No. 4567813 is configured to link the pair of left and right wheels via the direction-changing member, tilting members, and string member. This is a complex structure with many drive parts, which can cause an increase in the production cost as well as the frequency of maintenance such as grease replenishment.

The left and right wheels are linked by connecting by means of a string member the direction-changing member, which is shaped in the form of a balance or pulley, and the left and right tilting members. This design requires the direction-changing member and tilting members to have a certain size and to be spaced a certain distance apart, which compromises the flexibility of equipment design.

The present invention solves these problems, an object thereof being to provide a running unit that can reduce the production cost and maintenance frequency, and allow for higher flexibility of equipment design, with a simple structure.

The above object is achieved by a running unit according to the present invention, which includes: a main body; a swing motion transmission connected to the main body; a pair of left and right pivot arms provided to the swing motion transmission so as to be pivotable about a pivot shaft; and wheels provided to the pivot arms respectively. The swing motion transmission includes a first rockable rotating element that rotates in conjunction with a pivoting movement of one of the pivot arms, a second rockable rotating element that rotates in conjunction with a pivoting movement of the other one of the pivot arms, a first rotating transmission element that transmits rotation via the first rockable rotating element and a first elongated transmission element, and a second rotating transmission element that transmits rotation via the second rockable rotating element and a second elongated transmission element. The first rotating transmission element and the second rotating transmission element are connected together, with respective rotating shafts thereof being coupled together by a linking shaft. The first rockable rotating element and the second rockable rotating element are configured to be able to rotate in conjunction with each other and in opposite directions.

According to the invention set forth in claim 1 and claim 5, the swing motion transmission includes a first rockable rotating element that rotates in conjunction with a pivoting movement of one pivot arm, a second rockable rotating element that rotates in conjunction with a pivoting movement of the other pivot arm, a first rotating transmission element that transmits rotation via the first rockable rotating element and a first elongated transmission element, and a second rotating transmission element that transmits rotation via the second rockable rotating element and a second elongated transmission element. The first rotating transmission element and the second rotating transmission element are connected together, with respective rotating shafts thereof coupled together by a linking shaft. The first rockable rotating element and the second rockable rotating element are configured to rotate in opposite directions in conjunction with each other. When one of the wheels swings up, for example, due to road surface conditions, the swing motion transmission allows the other pivot arm to swing down in conjunction with the pivoting movement of the one pivot arm, so that the other wheel swings down.

When, conversely, the other wheel swings up alone, the swing motion transmission allows the one wheel to cooperatively swing down.

Thus the swing motion transmission allows the pair of left and right wheels to change their height in accordance with the tilt in the left and right direction of the vehicle body, or the irregularities or slope of the road surface, so that the left and right wheels both reliably stay on the ground, which improves the running stability.

The pivot shafts and the linking shaft arranged in close proximity to each other allow for a compact configuration for moving the left and right wheels together in their swinging directions, and help improve the degree of freedom in the design of the running unit.

According to the configuration set forth in claim 2, the first elongated transmission element is a chain with ends, one end thereof being connected to the first rockable rotating element and the other end thereof being connected to the first rotating transmission element. The second elongated transmission element is a chain with ends, one end thereof being connected to the second rockable rotating element and the other end thereof being connected to the second rotating transmission element. The first rotating transmission element, first rockable rotating element, second rotating transmission element, and second rockable rotating element may be sprockets, so that they can reliably transmit rotation. The sprockets may each have teeth only over an arc where the open-ended chain engages, which reduces the overall weight of the swing motion transmission as well as the space the sprockets take up.

According to the configuration set forth in claim 3, the swing motion transmission includes a third rockable rotating element axially adjacent the first rockable rotating element and rotating therewith, a fourth rockable rotating element axially adjacent the second rockable rotating element and rotating therewith, a third rotating transmission element that transmits rotation via the third rockable rotating element and a third elongated transmission element, and a fourth rotating transmission element that transmits rotation via the fourth rockable rotating element and a fourth elongated transmission element. The third rotating transmission element and the fourth rotating transmission element are connected together by a linking shaft. The third elongated transmission element is configured to transmit rotation by pulling, in the opposite direction, from the first elongated transmission element, and the fourth elongated transmission element is configured to transmit rotation by pulling, in the opposite direction, from the second elongated transmission element. The elongated transmission elements are unlikely to slacken no matter which way each pivot arm moves. For example, even when the main body is picked up so that both wheels are lifted up from the ground, both pivot arms move cooperatively in opposite directions rather than swinging down together.

According to the configuration set forth in claim 4, the third elongated transmission element is a chain with ends, one end thereof being connected to the third rockable rotating element and the other end thereof being connected to the third rotating transmission element. The fourth elongated transmission element is a chain with ends, one end thereof being connected to the fourth rockable rotating element and the other end thereof being connected to the fourth rotating transmission element. The third rotating transmission element, third rockable rotating element, fourth rotating transmission element, and fourth rockable rotating element may be sprockets, so that they can reliably transmit rotation. The sprockets may each have teeth only over an arc where the open-ended chain engages, which reduces the overall weight of the swing motion transmission as well as the space the sprockets take up.

### BRIEF DESCRIPTION OF THE DRAWINGS

FIG. 1 is a perspective view of a running unit 100 according to a first embodiment of the present invention;
FIG. 2 is a top view of the running unit 100 according to the first embodiment of the present invention;
FIG. 3 is a front view of the running unit 100 according to the first embodiment of the present invention;
FIG. 4 is a perspective view of the running unit 100 according to the first embodiment of the present invention seen from below;
FIG. 5 is an enlarged illustrative view of a swing motion transmission 120 of the running unit 100 according to the first embodiment of the present invention;
FIG. 6 is a diagram explaining the operation of the present invention viewed from behind;
FIG. 7 is an illustrative view of the present invention seen from the second wheel 113L side when the second wheel 113L swings up;
FIG. 8 is an illustrative view of the present invention seen from the first wheel 113R side when the second wheel 113L swings up; and
FIG. 9 is an enlarged illustrative view of a swing motion transmission 120b of a running unit 100b according to a second embodiment of the present invention.

### DESCRIPTION OF THE PREFERRED EMBODIMENTS

A running unit 100 according to one embodiment of the present invention is described below with reference to the drawings.

In the illustration, other components than the running unit 100 of the running vehicle are not illustrated, so that the main body 110 is depicted as separate left and right parts. In actuality, the left and right parts of the main body 110 are coupled together by other components not shown here, so that the main body 110 is in one piece and the pivot shafts 111 (first pivot shaft 111R and second pivot shaft 111L) and the linking shaft 125 are at fixed positions relative to each other.

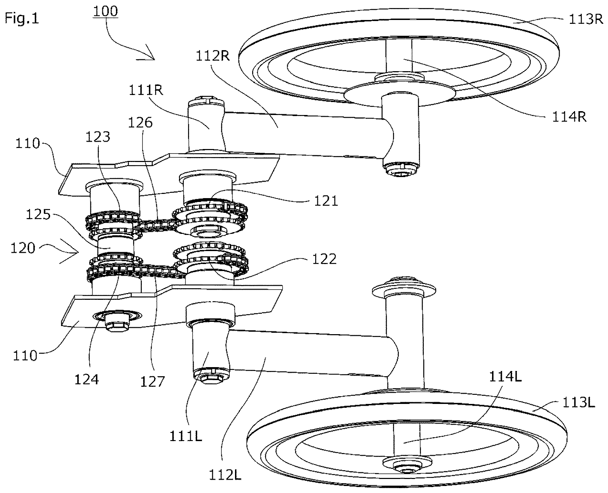

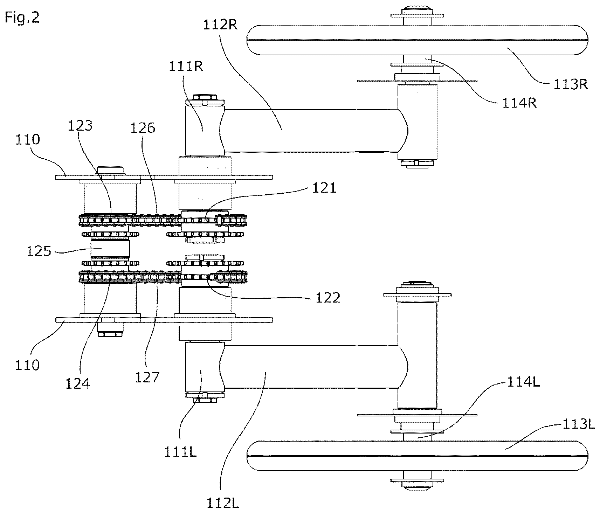

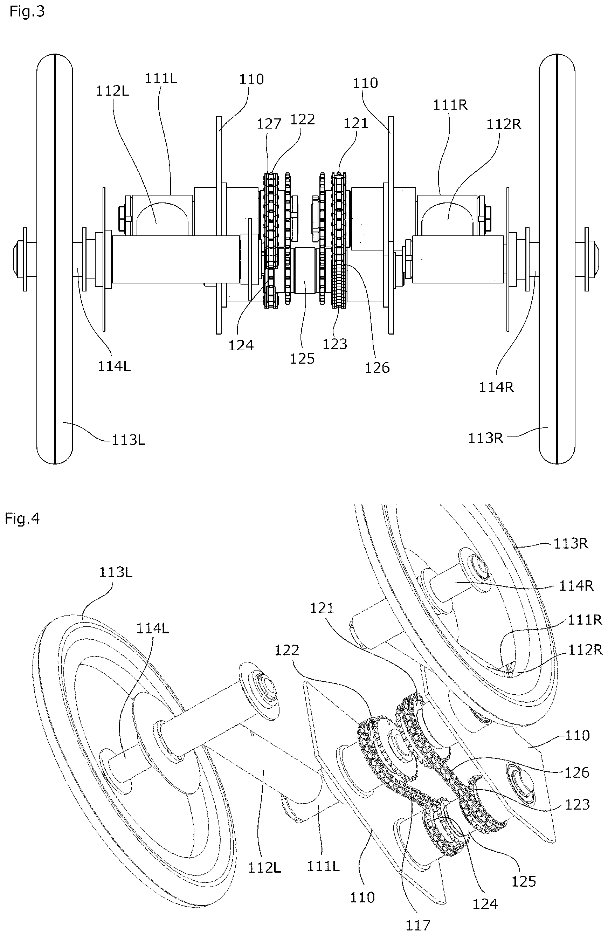

The running unit 100 according to the first embodiment of the present invention includes, as shown in FIG. 1 to FIG. 5, a main body 110, a swing motion transmission 120 connected to the main body 110, a pair of left and right pivot arms 112 (first pivot arm 112R and second pivot arm 112L) provided to the swing motion transmission 120 such as to be pivotable about pivot shafts 111 (first pivot shaft 111R and second pivot shaft 111L), wheels 113 (first wheel 113R and second wheel 113L) connected to the respective pivot arms 112 such as to be rotatable about rotating shafts 114 (first rotating shaft 114R and second rotating shaft 114L).

The swing motion transmission 120 includes a first rockable sprocket 121 that is a first rockable rotating element connected to the first pivot arm 112R via the first pivot shaft 111R, a second rockable sprocket 122 that is a second rockable rotating element connected to the second pivot arm 112L via the second pivot shaft 111L, a first transmission sprocket 123 that is a first rotating transmission element for transmitting rotation via the first rockable sprocket 121 and a first chain 126 that is a first elongated transmission element, and a second transmission sprocket 124 that is a second rotating transmission element for transmitting rotation via the second rockable sprocket 122 and a second chain 127 that is a second elongated transmission element.

The first transmission sprocket 123 and second transmission sprocket 124 are connected together by a linking shaft 125 that couples together their rotating shafts.

The first chain 126 is stretched between the lower sides of the first rockable sprocket 121 and first transmission sprocket 123, one end and the other end of the first chain 126 being fixed to the first rockable sprocket 121 and the first transmission sprocket 123, respectively.

The second chain 127 is stretched between the lower side of the second rockable sprocket 122 and the upper side of the second transmission sprocket 124, one end and the other end of the second chain 127 being fixed to the second rockable sprocket 122 and the second transmission sprocket 124, respectively.

The first rockable sprocket 121 and second rockable sprocket 122 are thus linked such as to be rotatable in opposite directions.

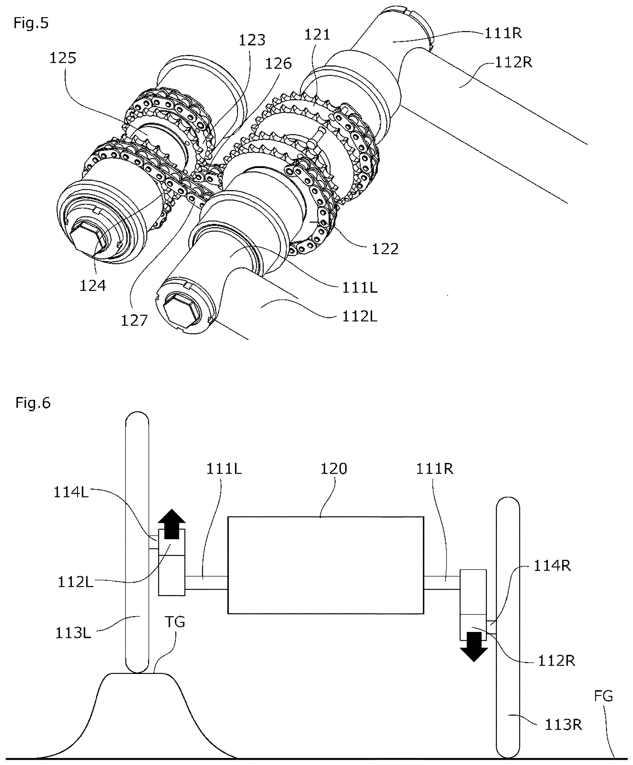

Next, the coordinated movements of the first wheel 113R and second wheel 113L of the running unit 100 according to one embodiment of the present invention are described with reference to FIG. 6 to FIG. 8.

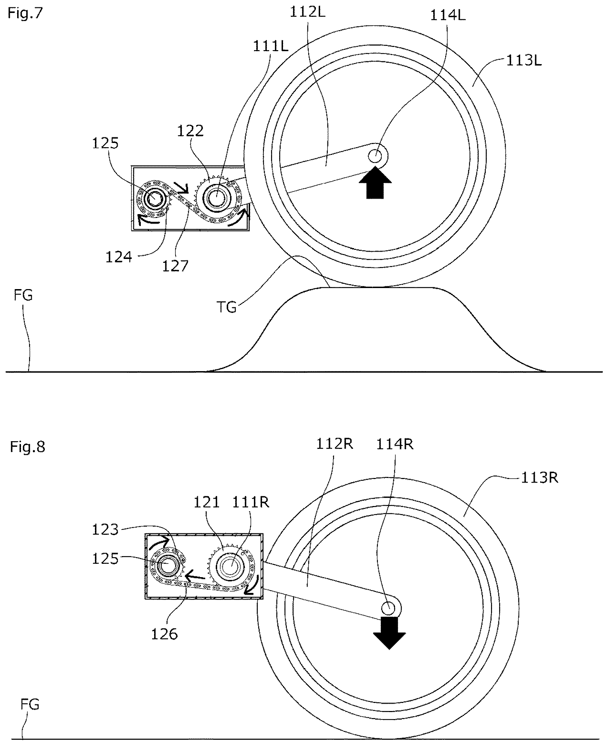

When the second wheel 113L of the running unit 100 running on a flat surface FG rides up onto a raised surface TG as shown in FIG. 7, the second pivot arm 112L swings up about the second pivot shaft 111L.

At this time, the second rockable sprocket 122 connected to the second pivot arm 112L via the second pivot shaft 111L rotates, too. Since the second chain 127 is wound around the second transmission sprocket 124 and second rockable sprocket 122 in opposite directions, the second transmission sprocket 124 rotates reversely from the second rockable sprocket 122.

Since the first transmission sprocket 123 and second transmission sprocket 124 are connected together by the linking shaft 125 that couples together their rotating shafts, the first transmission sprocket 123 rotates in the same direction as the second transmission sprocket 124.

Since the first chain 126 is wound around the first transmission sprocket 123 and first rockable sprocket 121 in the same direction, the first rockable sprocket 121 rotates in the same direction as the first transmission sprocket 123, and in the reverse direction from the second rockable sprocket 122.

This causes the first pivot arm 112R connected to the first rockable sprocket 121 via the first pivot shaft 111R to swing down so that the first wheel 113R makes contact with the flat surface FG.

As the running vehicle moves on and the second wheel 113L comes from the top of the raised surface TG down to the flat surface FG, the force that swings the second wheel 113L upward is lost, so that the second wheel 113L starts to swing down with the second pivot arm 112L by the weight of the second wheel 113L.

In the meantime, the first wheel 113R, while maintaining contact with the flat surface FG, swings up with the first pivot arm 112R as viewed from the first pivot shaft 111R, so that the left and right wheels 113 make contact with the flat surface FG with their rotating shafts 114 being positioned on a straight line.

The left and right wheels 113 are configured to swing cooperatively in opposite directions from each other in this way so that, even when one wheel 113 rides up onto a step or the like, the other wheel 113 can stay on the ground, without causing the main body 110 to tilt largely. Thus the running stability can be improved.

Needless to say, when the first wheel 113R swings up alone, the first wheel 113R and the second wheel 113L move cooperatively and the second wheel 113L swings down.

Also, when the running vehicle turns a curve, for example, and the vehicle body tilts, the first wheel 113R and second wheel 113L can both stay on the ground, and thus the running stability can be improved.

The sprockets may be partly or entirely toothless on the outer circumference as long as they are able to transmit the pulling force exerted by the open-ended first chain 126 and the second chain 127 wound around and fixedly attached to the sprockets at both ends.

The first chain 126 that is wound around the sprockets in the same direction may be formed as an endless chain and passed around the sprockets.

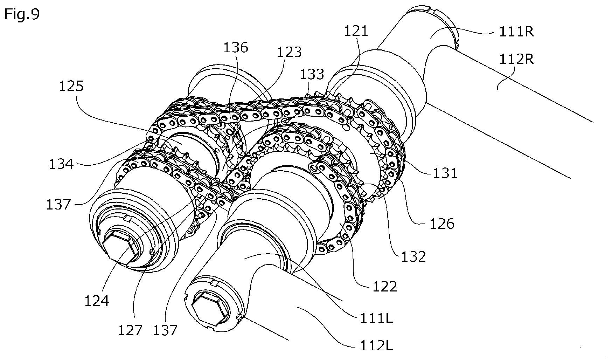

A running unit 100b according to a second embodiment of the present invention includes, as shown in FIG. 9, a third rockable sprocket 131 that is a third rockable rotating element axially adjacent the first rockable sprocket 121 to rotate therewith, a fourth rockable sprocket 132 that is a fourth rockable rotating element axially adjacent the second rockable sprocket 122 to rotate therewith, a third transmission sprocket 133 for transmitting rotation via the third rockable sprocket 131 and a third chain 136 that is a third elongated transmission element, and a fourth transmission sprocket 134 for transmitting rotation via the fourth rockable sprocket 132 and a fourth chain 137 that is a fourth elongated transmission element, in addition to the components similar to the first embodiment.

The first transmission sprocket 123, second transmission sprocket 124, third transmission sprocket 133, and fourth transmission sprocket 134 are connected together by the linking shaft 125 that couples together their rotating shafts.

Similarly to the first embodiment, the first chain 126 is stretched between the lower sides of the first rockable sprocket 121 and first transmission sprocket 123, one end and the other end of the first chain 126 being fixed to the first rockable sprocket 121 and the first transmission sprocket 123, respectively.

Similarly to the first embodiment, the second chain 127 is stretched between the lower side of the second rockable sprocket 122 and the upper side of the second transmission sprocket 124, one end and the other end of the second chain 127 being fixed to the second rockable sprocket 122 and the second transmission sprocket 124, respectively.

In this embodiment, moreover, the third chain 136 is stretched between the upper sides of the third rockable sprocket 131 and the third transmission sprocket 133, one end and the other end of the third chain 136 being fixed to the third rockable sprocket 131 and the third transmission sprocket 133, respectively.

The fourth chain 137 is stretched between the upper side of the fourth rockable sprocket 132 and the lower side of the fourth transmission sprocket 134, one end and the other end of the fourth chain 137 being fixed to the fourth rockable sprocket 132 and the fourth transmission sprocket 134, respectively.

Thus the third rockable sprocket 131 and fourth rockable sprocket 132 are linked such as to be rotatable in opposite directions similarly to the first rockable sprocket 121 and second rockable sprocket 122. Therefore, when the main body 100b is picked up so that both wheels 113 (first wheel 113R and second wheel 113L) are lifted up from the ground, the pivot arms 112 (first pivot arm 112R and second pivot arm 112L) can move in opposite directions rather than swinging down together.

While embodiments of the present invention have been described above in detail, the present invention is not limited to the embodiments described above. Various design changes may be made without departing from the scope of the claims set forth in the claims.

The running unit according the present invention can be used for various types of vehicles that run on wheels, such as engine- or motor-driven vehicles, human-powered bicycles or cargo-carrying carts.

While the wheels of the running unit can serve as rear wheels of a running vehicle as described in the embodiments above, this configuration is not limiting. For example, the running unit may be attached to a running vehicle such as to function as front wheels.

While the elongated transmission element is a chain in the embodiments described above, the elongated transmission element may be a band-like member such as a belt, or a string-like member such as a rope.

## Claims

1. A running unit comprising:
a main body;
a swing motion transmission provided to the main body;
a pair of left and right pivot arms provided to the swing motion transmission so as to be pivotable about a pivot shaft; and
wheels provided to the pivot arms respectively,
the swing motion transmission including a first rockable rotating element that rotates in conjunction with a pivoting movement of one of the pivot arms, a second rockable rotating element that rotates in conjunction with a pivoting movement of another one of the pivot arms, a first rotating transmission element that transmits rotation via the first rockable rotating element and a first elongated transmission element, and a second rotating transmission element that transmits rotation via the second rockable rotating element and a second elongated transmission element,
the first rotating transmission element and the second rotating transmission element being connected together, with respective rotating shafts thereof being coupled together by a linking shaft, and
the first rockable rotating element and the second rockable rotating element being configured to be able to rotate in conjunction with each other and in opposite directions.

2. The running unit according to claim 1, wherein
the first elongated transmission element is a chain with ends, one end thereof being connected to the first rockable rotating element and another end thereof being connected to the first rotating transmission element, and
the second elongated transmission element is a chain with ends, one end thereof being connected to the second rockable rotating element and another end thereof being connected to the second rotating transmission element.

3. The running unit according to claim 1, wherein the swing motion transmission includes
a third rockable rotating element axially adjacent the first rockable rotating element and rotating therewith, a fourth rockable rotating element axially adjacent the second rockable rotating element and rotating therewith,
a third rotating transmission element that transmits rotation via the third rockable rotating element and a third elongated transmission element, and a fourth rotating transmission element that transmits rotation via the fourth rockable rotating element and a fourth elongated transmission element,
the third rotating transmission element and the fourth rotating transmission element are connected together by a linking shaft,
the third elongated transmission element is configured to transmit rotation by pulling, in an opposite direction, from the first elongated transmission element, and
the fourth elongated transmission element being configured to transmit rotation by pulling, in an opposite direction, from the second elongated transmission element.

4. The running unit according to claim 3, wherein
the third elongated transmission element is a chain with ends, one end thereof being connected to the third rockable rotating element and another end thereof being connected to the third rotating transmission element, and
the fourth elongated transmission element is a chain with ends, one end thereof being connected to the fourth rockable rotating element and another end thereof being connected to the fourth rotating transmission element.

5. A running vehicle comprising a vehicle body, a front running part having a wheel, and a rear running part having a wheel, at least one of the front running part and the rear running part being configured by the running unit according to any one of claims 1 to 4.
